# EUROPÄISCHE PATENTSCHRIFT

(11) **EP 2 716 497 B1**
(45) Veröffentlichungstag und Bekanntmachung des Hinweises auf die Patenterteilung: **16.11.2022**
(21) Anmeldenummer: 13187320.0
(22) Anmeldetag: 04.10.2013
(51) Int. Cl.: B60Q 1/12

(54) **Verfahren und Vorrichtung zum Einstellen eines Schwenkwinkels eines Scheinwerfers bei einer Kurvenfahrt**
Method and device for adjusting a pivot angle of a headlamp while driving around a corner
Procédé et dispositif de réglage d'un angle de rotation d'un phare dans un virage

(30) Priorität: 04.10.2012 DE 102012109423
(43) Veröffentlichungstag der Anmeldung: 09.04.2014
(73) Patentinhaber: HELLA GmbH & Co. KGaA, 59552 Lippstadt (DE)
(72) Erfinder: Kubitza, Boris, 59159 Möhnesee-Körbecke (DE); Krauß, Andreas, 59597 Erwitte (DE); Schmidt, Jürgen, 33106 Paderborn (DE)

(56) Entgegenhaltungen:
- EP-A1- 2 298 603
- EP-A2- 0 842 817
- EP-A2- 2 384 932
- EP-A2- 2 384 932
- DE-A1- 10 347 552
- DE-A1-102008 054 005
- JP-A- 2002 225 618
- US-A1- 2003 031 020

## Beschreibung

Die Erfindung betrifft ein Verfahren und eine Vorrichtung zum Einstellen eines Schwenkwinkels eines Scheinwerfers mit asymmetrischem Abblendlicht bei einer Kurvenfahrt eines Fahrzeugs mit den Merkmalen aus dem Oberbegriff des Anspruchs 1.

Aus der Offenlegungsschrift DE 10 2008 054 005 A1 ist ein derartiges Verfahren und eine derartige Vorrichtung bekannt. Die Figur 1 dieser Offenlegungsschrift zeigt eine Draufsicht auf die Kurvenfahrt eines Fahrzeugs. Das Fahrzeug hat Kurvenlicht Scheinwerfer, die um einen Schwenkwinkel gegenüber der Fahrzeuglängsachse geschwenkt sind. Zum Einstellen des Schwenkwinkels bzw. zum Ermitteln des Schwenkwinkels, um den die Kurvenlicht Scheinwerfer geschwenkt werden, wird folgendermaßen vorgegangen: Zunächst wird eine so genannte Vorausschaudistanz bestimmt. Die Vorausschaudistanz kann im Grunde genommen willkürlich festgelegt werden. Die Vorausschaudistanz beträgt üblicherweise bei Fahrzeugen mit einer Einbauhöhe von 65 cm der Scheinwerfer 65 m. Um eine optimale Ausleuchtung der Straße bei einer Kurvenfahrt oder einer Geradeausfahrt zu erhalten, wird die Vorausschaudistanz sinnvollerweise auf die so genannte Referenzleuchtweite der Scheinwerfer bzw. gewählte Lichtverteilung der Scheinwerfer eingestellt. Die Referenzleuchtweite ergibt sich aus gesetzlichen Regelungen, nach denen das Abblendlicht 1% Gefälle gegenüber der Fahrzeuglängsachse aufweisen muss. Die Referenzleuchtweite bezeichnet beim Abblendlicht den Ort des so genannten Zwickels.

Der Zwickel ist der Punkt, der sich bei einer Projektion eines Schnittpunktes eines horizontalen Teils einer Hell-Dunkel-Grenze des Scheinwerfers und eines ansteigenden Astes der Hell-Dunkel-Grenze des Scheinwerfers in einer Ebene auf die Fahrbahn ergibt, wobei die Ebene, in welcher der Schnittpunkt liegt, vor dem Fahrzeug und senkrecht zur Fahrzeuglängsachse liegt. Die Ebene kann beispielsweise eine Prüffläche für Scheinwerferlicht sein, wie sie bei der Einstellung von Hauptscheinwerfern benutzt wird (siehe "Lichttechnik und Scheibenreinigung am Kraftfahrzeug", ISBN 3-7782-2039-X, S. 35, Bild 15 und 16).

Ist die Vorausschaudistanz festgelegt, wird bei dem in der Offenlegungsschrift DE 10 2008 054 005 A1 offenbarten Verfahren vom Fahrzeug aus der Punkt in der Vorausschaudistanz bestimmt, der auf der Fahrbahnmitte des zu durchfahrenden Straßenverlaufs liegt. Ist dieser Punkt festgestellt, wird die Richtung des Punktes vom Fahrzeug aus ermittelt. Der Winkel zwischen dieser ermittelten Richtung des Punktes auf der Fahrbahnmitte zur Fahrzeuglängsachse ist der gesuchte Schwenkwinkel, um welchen die Scheinwerfer beim Durchfahren einer Kurve geschwenkt werden. Nach dem schwenken der Scheinwerfer liegt der so genannte Zwickel dann in der Fahrbahnmitte.

Nach dem vorbeschriebenen Verfahren schwenken bei Rechtsverkehr besonders in Linkskurven die Scheinwerfer so stark, dass die Bereiche der Scheinwerfer, die bei Geradeausfahrt nur zur Beleuchtung der rechten Fahrbahn vorgesehen sind (und rechts vom so genannten Zwickel liegen) auch die linke Fahrbahn beleuchten. Dadurch entsteht die Gefahr, dass entgegenkommender Verkehr geblendet wird. In Rechtskurven wird dagegen der Zwickel der Hell-Dunkel-Grenze teilweise über den rechten Fahrbahnrand hinaus geschwenkt, was zu einer reduzierten Ausleuchtung der rechten Fahrbahn führt.

Gemäß dem Verfahren nach dem Dokument EP 2 298 603 A1 wird bei Rechtsverkehr vom Platz eines Fahrzeugführers eines Linkslenker-Fahrzeugs eine Tangente an den rechten Fahrbahnrand oder die Mittellinie gelegt. Der Berührpunkt der Tangente wird dann vom Mittelpunkt der Fahrzeugfront zwischen den beiden Scheinwerfern angepeilt. Zwischen der Fahrzeuglängsachse und dieser Peilgeraden ergibt sich dann der Schwenkwinkel, um welchen die Scheinwerfer geschwenkt werden. Die Schwenkrichtung des kurveninneren Scheinwerfers kann durch eine Parallelverschiebung der Peilgeraden konstruiert werden. Es ergibt sich dabei, dass die Schwenkrichtung der kurveninneren Scheinwerfer über den rechten Fahrbahnrand (Rechtskurve) oder die Mittellinie (Linkskurve) hinausgeht. Dann besteht in Linkskurven die Gefahr einer Blendung des Gegenverkehrs.

Weitere Verfahren zum Einstellen von Schwenkwinkeln sind in den Dokumenten EP 2 384 932 A2 und JP 2002 225618 A offenbart.

Hier setzt die vorliegende Erfindung an.

Der vorliegenden Erfindung liegt die Aufgabe zu Grunde, ein Verfahren und eine Vorrichtung der eingangs genannten Art so weiterzuentwickeln, dass der Gegenverkehr möglichst wenig geblendet wird und die eigene Fahrbahn möglichst gut ausgeleuchtet wird.

Diese Aufgabe wird erfindungsgemäß durch ein Verfahren nach Anspruch 1 und eine Vorrichtung nach Anspruch 8 gelöst.

Bei der ermittelten Fahrbahnlinie kann es sich z.B. um eine Mittellinie, den rechten Fahrbahnrand, den linken Fahrbahnrand oder um jede andere Fahrbahnlinie handeln. Eine Fahrbahnlinie kann, muss aber keine Fahrbahnmarkierung sein, die auf der Fahrbahn angebracht ist. Vielmehr kann eine Fahrbahn in beliebig viele Fahrbahnlinien zerlegt werden. Eine Fahrbahnlinie kann die prädizierte Linie sein, die sich aufgrund des Straßenverlaufs und der Position des eigenen Fahrzeugs voraussichtlich ergibt. So kann beispielsweise die Fahrbahnlinie der rechte oder der linke Rand der Fahrbahn sein, der das Fahrzeug voraussichtlich folgt oder die das Fahrzeug bei der Weiterfahrt überstreichen wird.

Die Tangente vom Scheinwerfer zum Berührpunkt fällt vorzugsweise mit einem Strahl des vom Scheinwerfer erzeugten Lichtes zum Berührpunkt zusammen.

Die Ebene vor dem Fahrzeug und senkrecht zur Fahrzeuglängsachse, in welcher der Schnittpunkt des horizontalen Teils der Hell-Dunkel-Grenze des Scheinwerfers und des ansteigenden Astes der Hell-Dunkel-Grenze des Scheinwerfers definiert ist, kann eine Prüffläche sein, wie sie einleitend bereits beschrieben worden ist. Bei der Projektion dieses Punktes handelt es sich um den Punkt, der oft auch als Zwickel oder Knick oder Knickpunkt bezeichnet wird.

Der vorbestimmte Radius um den Berührpunkt kann kleiner als 1,5 m sein. Vorzugsweise ist er kleiner als 50 cm. Wünschenswert ist eine Übereinstimmung der Projektion des Schnittpunktes mit dem Berührpunkt.

Insbesondere zur Ermittlung der Fahrbahnlinie kann ein Straßenverlauf anhand einer digitalen Straßenkarte, eines Navigationssystems und/oder eines Kamerasystem ermittelt werden. Ferner ist es möglich, dass eine Position des Fahrzeugs ermittelt wird. Auch die Ermittlung der Position des Fahrzeugs kann der Ermittlung der Fahrbahnlinie dienen. Die Ermittlung der Position kann zum Beispiel satellitengestützt erfolgen. Die Fahrbahnerkennung kann Teil eines Spurerkennungssystem, eines Spurhalteassistenten/Spurassistenten (Querführungsunterstützung, lane departure warning), eines Systems zur Spurhalteunterstützung (lane keeping support), eines Spurwechselassistenten (lane change assistance) und/oder Systems zur Spurwechselunterstützung (lane change support) sein.

Gemäß der Erfindung ist es möglich, dass die Fahrbahnlinie aus dem Straßenverlauf und der Position des Fahrzeugs ermittelt wird.

Gemäß der Erfindung wird eine Vorausschaudistanz festgelegt. Das erfindungsgemäße Verfahren ist so ausgestaltet, dass bei festgelegter Vorausschaudistanz, die Einstellung des Scheinwerfers nur dann in der Art und Weise erfolgt, dass der Schnittpunkt in einen Kreis mit vorbestimmten Radius um den Berührpunkt fällt, wenn der Berührpunkt nicht weiter als die Vorausschaudistanz entfernt ist.

Gemäß der Erfindung wird das erfindungsgemäße Verfahren zum Einstellen eines Schwenkwinkels von wenigstens einem von wenigstens zwei Scheinwerfern mit asymmetrischem Abblendlicht genutzt. Dabei können eine erste Fahrbahnlinie und ein erste Berührpunkt ermittelt werden, wobei der erste Berührpunkt der Punkt ist, in welchem eine erste Tangente von einem ersten Scheinwerfer zu dem ersten Berührpunkt die erste Fahrbahnlinie berührt. Anschließend wird ermittelt, ob der erste Berührpunkt weiter als die Vorausschaudistanz vom Fahrzeug entfernt ist.

Wenn der erste Berührpunkt nicht weiter als die Vorausschaudistanz vom Fahrzeug entfernt ist, wird der erste Scheinwerfer so eingestellt, dass die Projektion eines Schnittpunktes eines horizontalen Teils einer Hell-Dunkel-Grenze des ersten Scheinwerfers und eines ansteigenden Astes der Hell-Dunkel-Grenze des ersten Scheinwerfers in einer Ebene vor dem Fahrzeug und senkrecht zur Fahrzeuglängsachse auf die Straße in einen Kreis mit einem vorbestimmten Radius um den ersten Berührpunkt fällt. Der zweite der wenigstens zwei Scheinwerfer kann ebenso eingestellt werden. Es ist aber auch möglich, dass der zweite Scheinwerfer nach anderen Algorithmen zu Einstellung von Kurvenlicht eingestellt wird. So kann zum Beispiel die Einstellung durch einen Algorithmus für so genanntes dynamisches Kurvenlicht erfolgen. Ferner ist denkbar, dass der zweite Scheinwerfer nicht geschwenkt wird und so eingestellt bleibt, wie er bei einer Geradausfahrt eingestellt ist.

Wenn der erste Berührpunkt weiter als die Vorausschaudistanz vom Fahrzeug entfernt ist, wird erfindungsgemäß eine zweite Fahrbahnlinie und ein zweiter Berührpunkt ermittelt werden, wobei der zweite Berührpunkt der Punkt ist, in welchem eine zweite Tangente von einem zweiten Scheinwerfer zu dem zweiten Berührpunkt die zweite Fahrbahnlinie berührt.

Wenn dann der zweite Berührpunkt nicht weiter als die Vorausschaudistanz vom Fahrzeug entfernt ist, wird der zweite Scheinwerfer so eingestellt , dass die Projektion eines Schnittpunktes eines horizontalen Teils einer Hell-Dunkel-Grenze des zweiten Scheinwerfers und eines ansteigenden Astes der Hell-Dunkel-Grenze des zweiten Scheinwerfers in einer Ebene vor dem Fahrzeug und senkrecht zur Fahrzeuglängsachse auf die Straße in einen Kreis mit einem vorbestimmten Radius um den zweiten Berührpunkt fällt. Der erste Scheinwerfer kann ebenso eingestellt werden. Es ist aber auch möglich, dass der erste Scheinwerfer nach anderen Algorithmen zur Einstellung von Kurvenlicht eingestellt wird. So kann zum Beispiel die Einstellung durch einen Algorithmus für so genanntes dynamisches Kurvenlicht erfolgen. Die Einstellung durch einen Algorithmus für das dynamische Kurvenlicht hat den Vorteil, damit ein Einfluss von falschen oder ungenauen Prädiktionsdaten eines prädiktiven Kurvenlichtes verhindert wird. Ferner ist denkbar, dass der erste Scheinwerfer nicht geschwenkt wird und so eingestellt bleibt, wie er bei einer Geradausfahrt eingestellt ist.

Ein erfindungsgemäßes Verfahren wird mit einer Vorrichtung zum Einstellen eines Schwenkwinkels wenigstens eines Scheinwerfers mit asymmetrischem Abblendlicht bei einer Kurvenfahrt eines Fahrzeuges durchgeführt, das eine Schnittstelle zur Verbindung mit einer Vorrichtung zur Ermittlung eines Straßenverlaufs und einer Vorrichtung zur Ermittlung einer Position des Fahrzeugs aufweist. Die erfindungsgemäße Vorrichtung weist ein Mittel zum Ermitteln wenigstens einer Fahrbahnlinie und eines Berührpunktes auf, in welchem eine Tangente von dem Scheinwerfer zum Berührpunkt die Fahrbahnlinie berührt. Außerdem weist die Vorrichtung ein Mittel zum Erzeugen eines Steuersignals auf, um den Scheinwerfer so einzustellen, dass eine Projektion eines Schnittpunktes eines horizontalen Teils einer Hell-Dunkel-Grenze des Scheinwerfers und eines ansteigenden Astes der Hell-Dunkel-Grenze des Scheinwerfers in einer Ebene vor dem Fahrzeug und senkrecht zur Fahrzeuglängsachse auf die Straße in einen Kreis mit einem vorbestimmten Radius um den Berührpunkt fällt.

Anhand der beigefügten Zeichnungen wird die Erfindung nachfolgend näher erläutert.

Dabei zeigt:
- Fig. 1: eine Draufsicht auf ein Fahrzeug kurz vor der Einfahrt in eine Linkskurve,
- Fig. 2: eine Draufsicht auf ein Fahrzeug kurz vor der Einfahrt in eine Rechtskurve und
- Fig. 3: ein Ablaufdiagramm für ein erfindungsgemäßes Verfahren.

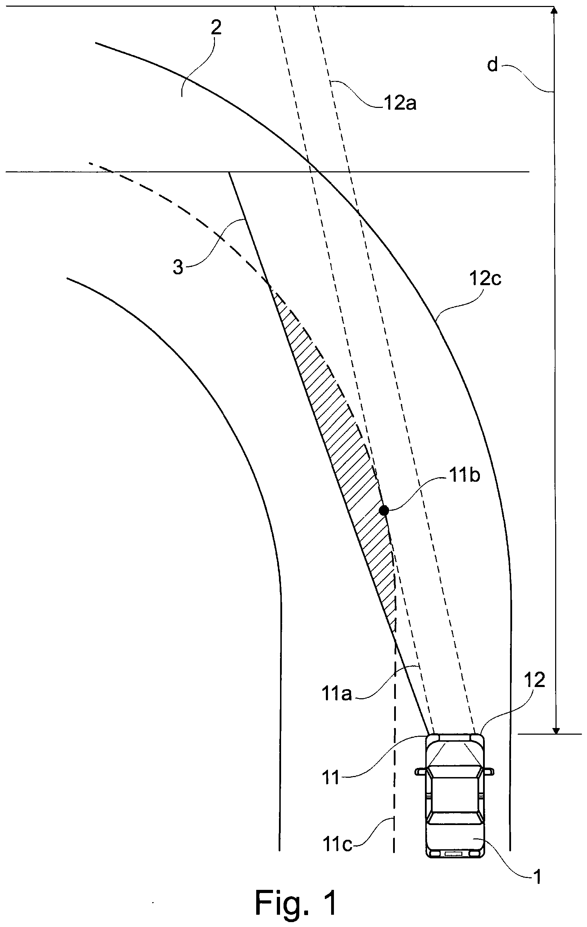

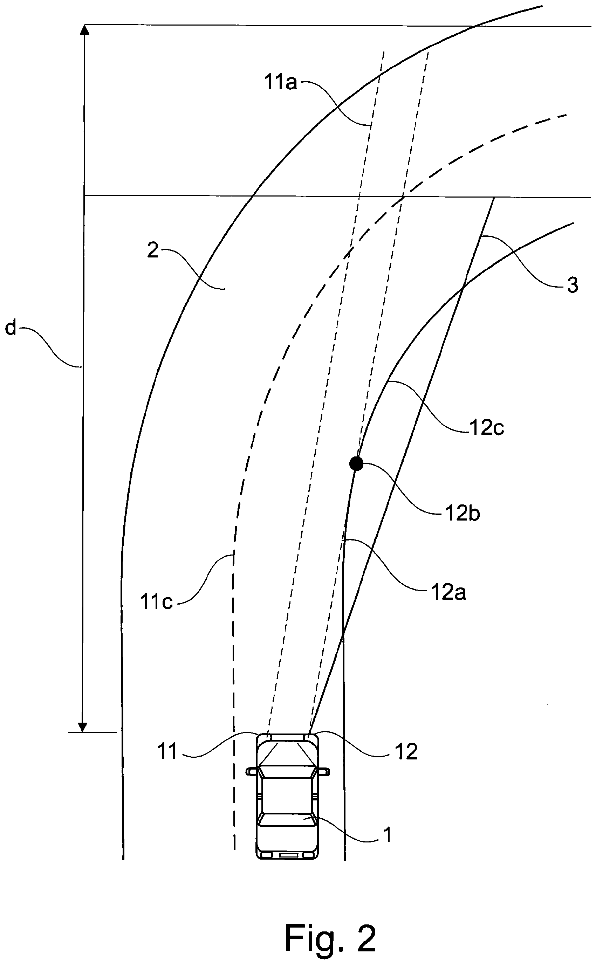

In den Figuren 1 und 2 ist mit dem Bezugszeichen 1 das Fahrzeug bezeichnet, welches in Kürze in eine Linkskurve bzw. Rechtskurve einer Straße 2 einfahren wird. Das Fahrzeug 1 hat einen linken Abblendlichtscheinwerfer 11 und einen rechten Abblendlichtscheinwerfer 12. Bei den beiden Scheinwerfern handelt es sich um sogenannte Kurvenlichtscheinwerfer, deren Lichtachsen je nach Verlauf der Straße bzw. einer prädizierten Fahrbahn des Fahrzeugs 1 geschwenkt werden können, damit die zu durchfahrende Fahrbahn oder Fahrstrecke beleuchtet wird.

Nach der geltenden ECE-Regel 48 ist es in den in Figuren 1 und 2 dargestellten Verkehrssituationen gestattet, die Abblendlichtscheinwerfer bis zu den in den Figuren 1 und 2 dem Bezugszeichen 3 bezeichneten Geraden zu schwenken. Der Winkel zwischen den Geraden 3 und den Längsachsen 13 der Fahrzeuge ist der maximal zulässige Schwenkwinkel, der bei vielen Fahrzeugen gemäß dem Stand der Technik auch an den Kurvenlichtscheinwerfern eingestellt wird. Das Einstellen des maximal zulässigen Schwenkwinkel hat aber zur Folge, dass bei einer Linkskurve - Rechtsverkehr vorrausgesetzt - ein Bereich der Gegenfahrspur so beleuchtet wird, dass entgegenkommende Fahrzeuge möglicherweise geblendet werden können. Bei einer Rechtskurve - ebenfalls Rechtsverkehr vorrausgesetzt - kann es dagegen bei Einstellung des maximal zulässigen Schwenkwinkels dazu kommen, dass die Fahrbahn des Fahrzeugs 1 nicht optimal ausgeleuchtet wird und statt dessen im Wesentlichen der Seitenstreifen oder das Gelände rechts der Straße beleuchtet wird.

Nach dem erfindungsgemäßen Verfahren wird in der in den Figuren 1 und 2 dargestellten Verkehrssituation nicht der maximal zulässige Schwenkwinkel eingestellt.

Stattdessen wird in der Situation, wie sie in der Figur 1 dargestellt ist, der linke Abblendlichtscheinwerfer 11 so geschwenkt, dass die Projektion des Schnittpunktes eines horizontalen Teils einer Hell-Dunkel-Grenze des Scheinwerfers 11 mit einem ansteigenden Ast der Hell-Dunkel-Grenze des Scheinwerfers 12 aus eine Ebene senkrecht zur Fahrzeuglängsachse und vor dem Fahrzeug auf die Straße 2 mit einem ersten Berührpunkt 11b zusammenfällt. Der erste Berührpunkt 11b ist dabei der Punkt, der sich ergibt, wenn man vom linken Abblendlichtscheinwerfer 11 eine erste Tagente an die Mittelinie der Straße 2 legt, die die prädizierte Fahrbahn des Fahrzeugs 1 auf der linken Seite begrenzt. Die Mittellinie bildet eine erste Fahrbahnlinie 11c, wie sie auch in den Ansprüchen erwähnt ist. Es ergibt sich dann für das vom linken Abblendlichtscheinwerfer 11 abgestrahlte Licht die mit dem Bezugszeichen 11a bezeichnete Lichtachse, die mit der ersten Tangenten zusammenfällt. Am rechten Abblendlichtscheinwerfer 12 wird der gleiche Schwenkwinkel eingestellt.

In der Verkehrssituation, wie sie in der Figur 2 dargestellt ist, wird nach dem erfindungsgemäßen Verfahren der rechte Abblendlichtscheinwerfer 12 so eingestellt, dass die Projektion des Schnittpunktes eines horizontalen Teils der Hell-Dunkel-Grenze des Abblendlichtscheinwerfers 12 mit einem ansteigenden Ast der Hell-Dunkel-Grenze des Abblendlichtscheinwerfers 12 aus einer Ebene senkrecht zur Fahrzeuglängsachse und vor dem Fahrzeug 1 auf die Straße mit einem zweiten Berührpunkt zusammenfällt. Der zweite Berührpunkt 12b ist dabei der Punkt, der sich ergibt, wenn man vom rechten Abblendlichtscheinwerfer 12 eine zweite Tagente an die rechte Fahrbahnmarkierung der Straße 2 legt, die die prädizierte Fahrbahn des Fahrzeugs 1 auf der rechten Seite begrenzt. Die rechte Fahrbahnmarkierung bildet eine zweite Fahrbahnlinie 12c, wie sie auch in den Ansprüchen erwähnt ist. Es ergibt sich dann für das vom rechten Abblendlichtscheinwerfer 12 abgestrahlte Licht die mit dem Bezugszeichen 12a bezeichnete Lichtachse, die mit der zweiten Tangenten zusammenfällt. Am linken Abblendlichtscheinwerfer 11 wird der gleiche Schwenkwinkel eingestellt.

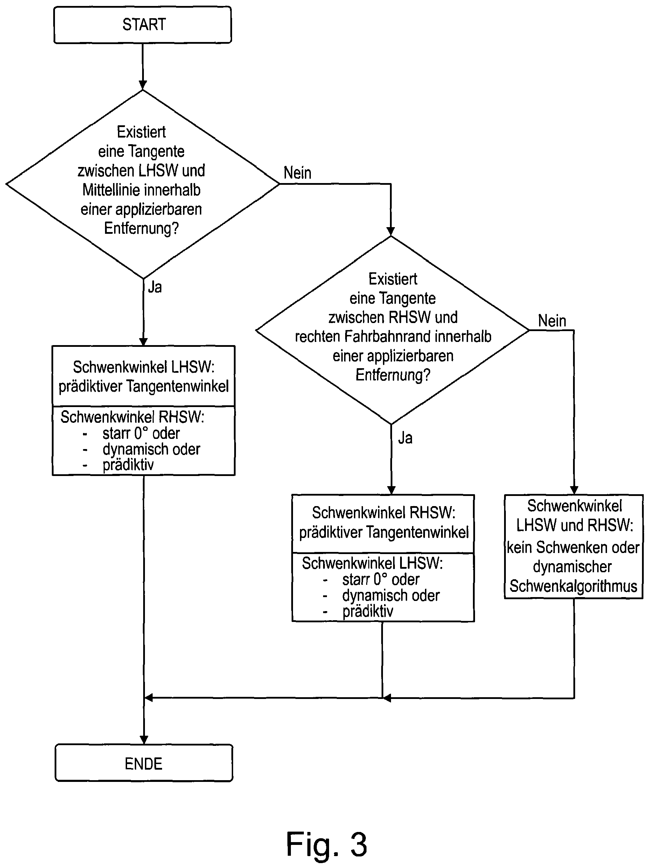

Das zur Einstellung der Abblendlichtscheinwerfer 11, 12 verwendete Verfahren geht aus dem Ablaufdiagramm hervor, das in Figur 3 wiedergeben ist.

Zunächst wird nach einem Start des Verfahrens untersucht, ob vom linken Abblendlichtscheinwerfer 11, in dem Ablaufdiagramm als linker Hauptscheinwerfer LHSW bezeichnet, eine erste Tangente an die erste Fahrbahnlinie 11c, d.h. die Mittellinie gelegt werden kann, wobei der erste Berührpunkt 11b nicht mehr als eine vorgegebene Vorausschaudistanz d von dem Fahrzeug 1 entfernt ist (Bedingung 1). Ist dass der Fall, wird am linken Abblendlichtscheinwerfer 11/LHSW der Schwenkwinkel eingestellt, bei dem die Projektion des Schnittpunktes des horizontalen Teils und des ansteigenden Astes der Hell-Dunkel-Grenze des Abblendlichtscheinwerfers 11/LHSW aus einer Ebene senkrecht zur Fahrzeuglängsachse und vor dem Fahrzeug 1 auf die Straße 2 mit dem ersten Berührpunkt 11b zusammenfällt. Das ist der Fall, wenn die erste Tangente vom Abblendlichtscheinwerfer 11/LHSW zur ersten Fahrbahnlinie und die Lichtachse des linken Abblendlichtscheinwerfer 11/LHSW zusammenfallen. Am rechten Abblendlichtscheinwerfer 12, in der Figur 3 mit RHSW bezeichnet, kann der gleiche Schwenkwinkel eingestellt werden. Es ist aber auch möglich, den rechten Abblendlichtscheinwerfer 12 nicht zu schwenken oder nach einem anderen Verfahren dynamisch oder prädiktiv zu schwenken.

Ist die Bedingung 1 nicht erfüllt, wird geprüft, ob vom rechten Abblendlichtscheinwerfer 12 eine zweite Tangente an die zweite Fahrbahnlinie 12c, d.h. die rechte Fahrbahnrandmarkierung gelegt werden kann, wobei der zweite Berührpunkt 12b nicht mehr als eine vorgegebene Vorausschaudistanz d von dem Fahrzeug 1 entfernt ist (Bedingung 2). Ist dass der Fall, wird am rechten Abblendlichtscheinwerfer 12/RHSW der Schenkwinkel eingestellt, bei dem die Projektion des Schnittpunktes des horizontalen Teils und des ansteigenden Astes der Hell-Dunkel-Grenze des Abblendlichtscheinwerfers 12/RHSW aus einer Ebene senkrecht zur Fahrzeuglängsachse und vor dem Fahrzeug 1 auf die Straße 2 mit dem zweiten Berührpunkt 12b zusammenfällt. Das ist der Fall, wenn die zweite Tangente vom Abblendlichtscheinwerfer 12/RHSW zur zweiten Fahrbahnlinie und die Lichtachse des rechten Abblendlichtscheinwerfers 12/RHSW zusammenfallen. Am linken Abblendlichtscheinwerfer 11 kann der gleiche Schwenkwinkel eingestellt werden. Es ist aber auch möglich den linken Abblendlichtscheinwerfer 11 nicht zu schwenken oder nach einem anderen Verfahren dynamisch oder prädiktiv zu schwenken.

Ist auch die zweite Bedingung nicht erfüllt, wird kein Schwenkwinkel eingestellt oder es wird nach einem anderen dynamischen Schwenkwinkel geschwenkt.

### Bezugszeichenliste

- 1: Fahrzeug
- 11: linker Abblendlichtscheinwerfer
- 11a: Lichtachse des linken Abblendlichtscheinwerfers
- 11b: Berührpunkt der ersten Tangente/Lichtachse an der ersten Fahrbahnlinie
- 11c: erste Fahrbahnlinie
- 12: rechter Abblendlichtscheinwerfer
- 12a: Lichtachse des rechten Abblendlichtscheinwerfers
- 12b: Berührpunkt der zweiten Tangente/Lichtachse an der zweiten Fahrbahnlinie
- 12c: zweite Fahrbahnlinie
- 2: Straße
- 3: Gerade mit maximalen Schwenkwinkel

## Patentansprüche

1. Verfahren zum Einstellen eines Schwenkwinkels wenigstens eines von wenigstens zwei Scheinwerfern (11, 12) mit asymmetrischem Abblendlicht bei einer Kurvenfahrt eines Fahrzeugs (1), wobei
- ein Verlauf einer ersten Fahrbahnlinie (11c, 12c) ermittelt wird,
- eine Vorausschaudistanz (d) festgelegt wird,
- ein erster Berührpunkt (11b, 12b) ermittelt wird, in welchem eine erste Tangente (11a, 12a) die erste Fahrbahnlinie berührt,
- dann ermittelt wird, ob der erste Berührpunkt (11b) weiter als die Vorausschaudistanz (d) vom Fahrzeug entfernt ist,
**gekennzeichnet dadurch,**
- **dass** die Vorausschaudistanz (d) auf eine Referenzleuchtweite des ersten Scheinwerfers festgelegt wird
- **dass** der erste Berührpunkt (11b, 12b) der ersten Tangente ermittelt wird, in dem die erste Tangente (11a, 12a) vom ersten Scheinwerfer (11, 12) an die erste Fahrbahnlinie gelegt wird, und
- **dass**, wenn der erste Berührpunkt (11b, 12b) nicht weiter als die Vorausschaudistanz (d) entfernt ist, der erste Scheinwerfer so eingestellt wird, dass eine Projektion eines Schnittpunktes eines horizontalen Teils einer Hell-Dunkel-Grenze des ersten Scheinwerfers und eines ansteigenden Astes der Hell-Dunkel-Grenze des ersten Scheinwerfers in einer Ebene vor dem Fahrzeug und senkrecht zur Fahrzeuglängsachse auf die Straße in einen Kreis mit einem vorbestimmten Radius um den ersten Berührpunkt (11b, 12b) fällt.

2. Verfahren nach Anspruch 1, **dadurch gekennzeichnet, dass** ein Straßenverlauf anhand einer digitalen Straßenkarte, eines Navigationssystems und/oder eines Kamerasystems ermittelt wird.

3. Verfahren nach Anspruch 1 oder 2, **dadurch gekennzeichnet, dass** eine Position des Fahrzeugs ermittelt wird.

4. Verfahren nach den Ansprüchen 2 und 3, **dadurch gekennzeichnet, dass** aus dem Straßenverlauf und der Position des Fahrzeugs (1) die erste Fahrbahnlinie (11c, 12c) ermittelt wird.

5. Verfahren nach einem der Ansprüche 1 bis 4, **dadurch gekennzeichnet, dass**, wenn der erste Berührpunkt (11b) nicht weiter als die Vorausschaudistanz (d) vom Fahrzeug (1) entfernt ist, der erste Scheinwerfer (11) so eingestellt wird, dass die Projektion eines Schnittpunktes eines horizontalen Teils einer Hell-Dunkel-Grenze des ersten Scheinwerfers (11) und eines ansteigenden Astes der Hell-Dunkel-Grenze des ersten Scheinwerfers (11) in einer Ebene vor dem Fahrzeug (1) und senkrecht zur Fahrzeuglängsachse auf die Straße in einen Kreis mit einem vorbestimmten Radius um den ersten Berührpunkt (11b) fällt.

6. Verfahren nach einem der Ansprüche 1 bis 5, **dadurch gekennzeichnet, dass**, wenn der erste Berührpunkt (11b) weiter als die Vorausschaudistanz (d) vom Fahrzeug (1) entfernt ist, eine zweite Fahrbahnlinie (12c) und ein zweiter Berührpunkt (12b) ermittelt werden, wobei der zweite Berührpunkt (12b) der Punkt ist, in welchem eine zweite Tangente (12a) von einem zweiten Scheinwerfer (12) zu dem zweiten Berührpunkt (12b) die zweite Fahrbahnlinie (12c) berührt.

7. Verfahren nach Anspruch 6, **dadurch gekennzeichnet, dass** der zweite Scheinwerfer (12) so eingestellt wird, dass die Projektion eines Schnittpunktes eines horizontalen Teils einer Hell-Dunkel-Grenze des zweiten Scheinwerfers (12) und eines ansteigenden Astes der Hell-Dunkel-Grenze des zweiten Scheinwerfers (12) in einer Ebene vor dem Fahrzeug (1) und senkrecht zur Fahrzeuglängsachse auf die Straße in einen Kreis mit einem vorbestimmten Radius um den zweiten Berührpunkt (12b) fällt, wenn der zweite Berührpunkt (12b) nicht weiter als die Vorausschaudistanz (d) vom Fahrzeug (1) entfernt ist.

8. Vorrichtung zum Einstellen eines Schwenkwinkels wenigstens eines Scheinwerfers mit asymmetrischem Abblendlicht bei einer Kurvenfahrt eines Fahrzeuges (1) nach einem der Verfahren nach den Ansprüchen 1 bis 7, wobei die Vorrichtung eine Schnittstelle zur Verbindung mit einer Vorrichtung zur Ermittlung eines Straßenverlaufs und/oder einer Vorrichtung zur Ermittlung einer Position des Fahrzeugs (1) aufweist,
**dadurch gekennzeichnet,**
- **dass** die Vorrichtung ein Mittel zum Ermitteln wenigstens einer Fahrbahnlinie (11c, 12c) und eines Berührpunktes (11b, 12b) aufweist, in welchem eine Tangente (11a, 12a) von dem Scheinwerfer zum Berührpunkt (11b, 12b) die Fahrbahnlinie berührt, und
- **dass** die Vorrichtung ein Mittel zum Erzeugen eines Steuersignals aufweist, um den Scheinwerfer (11, 12) so einzustellen, dass eine Projektion eines Schnittpunktes eines horizontalen Teils einer Hell-Dunkel-Grenze des Scheinwerfers (11, 12) und eines ansteigenden Astes der Hell-Dunkel-Grenze des Scheinwerfers (11, 12) in einer Ebene vor dem Fahrzeug (1) und senkrecht zur Fahrzeuglängsachse auf die Straße in einen Kreis mit einem vorbestimmten Radius um den Berührpunkt (11b, 12b) fällt.

## Claims

1. Method for adjusting a pivot angle of at least one of at least two headlamps (11, 12) with an asymmetric low beam while a vehicle (1) is driving around a corner, where
- a course of a first lane line (11c, 12c) is determined
- an anticipatory distance (d) is specified
- a first point of contact (11b, 12b) is determined in which a first tangent (11a, 12a) contacts the lane line
- it is then determined whether the first point of contact (11b) is further away from the vehicle than the anticipatory distance (d),
**characterised in that**
- the anticipatory distance (d) is specified as a reference headlamp range of the first headlamp
- the first point of contact (11b, 12b) of the first tangent is determined by the first tangent (11a, 12a) from the first headlamp (11, 12) being placed at the first lane line and
- if the first point of contact (11b, 2b) is not further away than the anticipatory distance (d), the first headlamp is adjusted in such a way that a projection of an intersection point of a horizontal part of a light/dark cut-off line of the first headlamp and a rising branch of the light/dark cut-off line of the first headlamp falls onto the road in a plane in front of the vehicle and vertically to the vehicle's longitudinal axis in a circle with a designated radius around the first point of contact (11b, 12b).

2. Method in accordance with Claim 1, **characterised in that** a road layout is determined on the basis of a digital map, a navigation system and/or a camera system.

3. Method in accordance with Claim 1 or 2 **characterized in that** a position of the vehicle is determined.

4. Method in accordance with Claims 2 and 3, **characterized in that** the first lane line (11c, 12c) is determined from the road layout and the position of the vehicle (1).

5. Method in accordance with one of Claims 1 through 4, **characterized in that**, if the first point of contact (11b) is not further away from the vehicle (1) than the anticipatory distance (d), the first headlamp (11) is set in such a way that the projection of an intersection point of a horizontal part of a light/dark cut-off line of the first headlamp (11) and a rising branch of the light/dark cut-off line of the first headlamp (11) falls onto the road in a plane in front of the vehicle (1) and vertically to the vehicle's longitudinal axis in a circle with a designated radius around the first point of contact (11b).

6. Method in accordance with one of Claims 1 through 5, **characterized in that** if the first point of contact (11b) is further away from the vehicle (1) than the anticipatory distance (d), a second lane line (12c) and a second point of contact (12b) are determined, where the second point of contact (12b) is the point at which a second tangent (12a) from a second headlamp (12) to the second point of contact (12b) comes into contact with the second lane line (12c).

7. Method in accordance with Claim 6, **characterized in that** the second headlamp (12) is set in such a way that the projection of an intersection of a horizontal part of a light-dark cut-off line of the second headlamp (12) and of a rising branch of the light-dark cut-off line of the second headlamp (12) falls onto the road in a plane in front of the vehicle (1) and vertically to the vehicle's longitudinal axis in a circle with a designated radius around the second point of contact (12b) if the second point of contact (12b) is not further away from the vehicle (1) than the anticipatory distance (d).

8. Device for adjusting a pivot angle of at least one headlamp with asymmetrical low beam while a vehicle (1) is driving around a corner in accordance with one of the methods in accordance with Claims 1 through 7, where the device features an interface for connecting to a device for determining a road layout and/or a device for determining a position of the vehicle (1),
**characterized in that**
- the device features a means of determining at least one lane line (11c, 12c) and of a point of contact (11b, 12b) in which a tangent (11a, 12a) from the headlamp to the point of contact (11b, 12b) contacts the lane line, and
- the device features a means for generating a control signal for adjusting the headlamp (11, 12) in such a way that a projection of an intersection point of a horizontal part of a light/dark cut-off line of the headlamp (11, 12) and a rising branch of the light/dark cut-off line (11, 12) falls onto the road in a plane in front of the vehicle (1) and vertically to the vehicle's longitudinal axis in a circle with a designated radius around the point of contact (11b, 12b).

## Revendications

1. Procédé de réglage d'un angle de rotation d'au moins un sur au moins deux phares (11, 12) d'un véhicule (1) avec feu de croisement asymétrique dans un virage, sachant
- qu'un tracé d'une première ligne de chaussée (11c, 12c) est déterminé,
- qu'une distance prévisionnelle (d) est définie,
- qu'un premier point de contact (11b, 12b) est déterminé, dans lequel une première tangente (11a, 12a) touche la première ligne de chaussée,
- que l'on détermine ensuite si le premier point de contact (11b) est plus éloigné du véhicule que la distance prévisionnelle (d),
**caractérisé en ce que,**
- la distance prévisionnelle (d) est définie sur une portée d'éclairage de référence du premier phare,
- le premier point de contact (11b, 12b) de la première tangente est déterminé, dans lequel la première tangente (11a, 12a) du premier phare (11, 12) est placée sur la première ligne de chaussée, et
- lorsque le premier point de contact (11b, 12b) n'est pas plus éloigné que la distance prévisionnelle (d), le premier phare est réglé de sorte qu'une projection d'un point d'intersection d'une partie horizontale d'une ligne de coupure clair/obscur du premier phare et d'une branche ascendante de la ligne de coupure clair/obscur du premier phare tombe sur la route sur un plan devant le véhicule et perpendiculaire à l'axe longitudinal du véhicule pour former un cercle ayant un rayon prédéterminé autour du premier point de contact (11b, 12b).

2. Procédé selon la revendication 1, **caractérisé en ce qu'**un tracé de route est déterminé au moyen d'une carte routière numérique, d'un système de navigation et/ou d'un système de caméra.

3. Procédé selon la revendication 1 ou 2, **caractérisé en ce qu'**une position du véhicule est déterminée.

4. Procédé selon les revendications 2 et 3, **caractérisé en ce que** la première ligne de chaussée (11c, 12c) est déterminée à partir du tracé de route et de la position du véhicule (1).

5. Procédé selon l'une des revendications 1 à 4, **caractérisé en ce que**, lorsque le premier point de contact (11b) n'est pas plus éloigné que la distance prévisionnelle (d) du véhicule (1), le premier phare (11) est réglé de sorte qu'une projection d'un point d'intersection d'une partie horizontale d'une ligne de coupure clair/obscur du premier phare (11) et d'une branche ascendante de la ligne de coupure clair/obscur du premier phare (11) tombe sur la route sur un plan devant le véhicule (1) et perpendiculaire à l'axe longitudinal du véhicule pour former un cercle ayant un rayon prédéterminé autour du premier point de contact (11b).

6. Procédé selon l'une des revendications 1 à 5, **caractérisé en ce que**, lorsque le premier point de contact (11b) est plus éloigné que la distance prévisionnelle (d) du véhicule (1), une deuxième ligne de chaussée (12c) et un deuxième point de contact (12b) sont déterminés, le deuxième point de contact (12b) étant le point auquel une deuxième tangente (12a) allant d'un deuxième phare (12) au deuxième point de contact (12b) touche la deuxième ligne de chaussée (12c).

7. Procédé selon la revendication 6, **caractérisé en ce que** le deuxième phare (12) est réglé de sorte qu'une projection d'un point d'intersection d'une partie horizontale d'une ligne de coupure clair/obscur du deuxième phare (12) et d'une branche ascendante de la ligne de coupure clair/obscur du deuxième phare (12) tombe sur la route sur un plan devant le véhicule (1) et perpendiculaire à l'axe longitudinal du véhicule pour former un cercle ayant un rayon prédéterminé autour du deuxième point de contact (12b), lorsque le deuxième point de contact (12b) n'est pas plus éloigné que la distance prévisionnelle (d) du véhicule (1).

8. Dispositif de réglage d'un angle de rotation d'au moins un phare d'un véhicule (1) avec feu de croisement asymétrique dans un virage d'après l'un des procédés selon les revendications 1 à 7, sachant que le dispositif présente une interface de liaison avec un dispositif de détermination d'un tracé de route et/ou un dispositif de détermination d'une position du véhicule (1),
**caractérisé en ce que,**
- le dispositif présente un moyen de détermination d'au moins une ligne de chaussée (11c, 12c) et d'un point de contact (11b, 12b) dans lequel une tangente (11a, 12a) depuis le phare jusqu'au point de contact (11b, 12b) touche la ligne de chaussée, et
- le dispositif présente un moyen d'émission d'un signal de commande, pour régler le phare (11, 12) de sorte qu'une projection d'un point d'intersection d'une partie horizontale d'une ligne de coupure clair/obscur du phare (11, 12) et d'une branche ascendante de la ligne de coupure clair/obscur du phare (11, 12) tombe sur la route sur un plan devant le véhicule (1) et perpendiculaire à l'axe longitudinal du véhicule pour former un cercle ayant un rayon prédéterminé autour du point de contact (11b, 12b).
